Europäisches Patentamt

European Patent Office

Office européen des brevets

(11) Veröffentlichungsnummer: **0 280 987**
A2

# (12) EUROPÄISCHE PATENTANMELDUNG

(21) Anmeldenummer: 88102587.8

(22) Anmeldetag: 22.02.88

(51) Int. Cl.4: **H04N 5/228** , H04N 5/32

(30) Priorität: 03.03.87 DE 3706756

(43) Veröffentlichungstag der Anmeldung:
07.09.88 Patentblatt 88/36

(84) Benannte Vertragsstaaten:
DE FR

(71) Anmelder: **Siemens Aktiengesellschaft Berlin
und München**
**Wittelsbacherplatz 2**
**D-8000 München 2(DE)**

(72) Erfinder: **Skiebitz, Hartmut**
**Würzburger Ring 45**
**D-8520 Erlangen(DE)**

(54) **Digitale Fernsehaufnahmevorrichtung.**

(57) Die Erfindung betrifft eine Fernsehaufnahmevorrichtung (5) mit einer Fernsehaufnahmeröhre (9), einer ein Ablenkfeld für den Abtaststrahl der Fernsehaufnahmeröhre (9) erzeugenden Ablenkvorrichtung (10), einem Analog/Digital-Wandler und einer Steuervorrichtung, die die Ablenkung des Abtaststrahles der Fernsehaufnahmeröhre (9) steuert und deren Synchronisierung mit dem Analog/Digital-Wandler bewirkt. Die Ablenkvorrichtung (10) der Fernsehaufnahmeröhre (9) ist derart ausgebildet, daß sie ein horizontales Ablenkfeld erzeugt, das eine diskrete, bildpunktweise Abtastung des Targets (13) der Fernsehaufnahmeröhre (9) synchron mit der Wandlerfrequenz des Analog/Digital-Wandlers bewirkt.

FIG 4

EP 0 280 987 A2

## Digitale Fernsehaufnahmevorrichtung

Die Erfindung betrifft eine Fernsehaufnahmevorrichtung mit einer Fernsehaufnahmeröhre, einer ein Ablenkfeld für den Abtaststrahl der Fernsehaufnahmeröhre erzeugenden Ablenkvorrichtung, einem Analog/Digital-Wandler und einer Steuervorrichtung, die die Ablenkung des Abtaststrahles der Fernsehaufnahmeröhre steuert und deren Synchronisierung mit dem Analog/Digital-Wandler bewirkt.

In der DE-PS 32 15 552 ist der Einsatz einer derartigen Fernsehaufnahmevorrichtung in einer Röntgendiagnostikeinrichtung beschrieben. Die Fernsehaufnahmeröhre, der in bekannter Weise eine Ablenkvorrichtung zugeordnet ist, nimmt das Ausgangsbild des Röntgenbildverstärkers auf und setzt es in eine elektrische Signalfolge um. Dieses Videosignal wird einem Analog/Digital-Wandler (A/D-Wandler) zugeführt. Anschließend wird das digitale Signal verarbeitet und als analoges Signal auf einem Monitor wiedergegeben.

Derartige Fernsehaufnahmeröhren besitzen ein homogenes Target, welches zeilenförmig abgetastet wird. Durch diese zeilenförmige Abtastung erhält man in vertikaler Richtung eine sozusagen quantisierte Abtastung und in horizontaler Richtung eine kontinuierliche Abtastung. Als Ergebnis dieser kontinuierlichen Abtastung entsteht ein Signalstrom, der verstärkt dem A/D-Wandler zugeführt wird. Um günstigste Verhältnisse zu schaffen, muß man eine Sample-Hold-Schaltung (S-H-Schaltung) vor dem Eingang des A/D-Wandlers anordnen. Diese integriert den Signalstrom über die Dauer eines Bildpunktes. Das Ausgangssignal wird für die anschließende Digitalisierung dem A/D-Wandler zugeführt. Entfällt diese Integration, so läuft man Gefahr, nach der Wandlung einen schlechteren Signal-Rausch-Abstand zu erhalten, weil handelsübliche A/D-Wandler im allgemeinen nur während einer sehr viel kürzeren Zeit (sogenannte Aperturzeit) Analoginformationen zur Wandlung akzeptieren, als die gesamte horizontale Dauer eines Bildpunktes aufweist. Ohne S-H-Schaltung würden Rauschspitzenspannungen daher verstärkten Einfluß auf das Ergebnis der Digitalisierung erlangen.

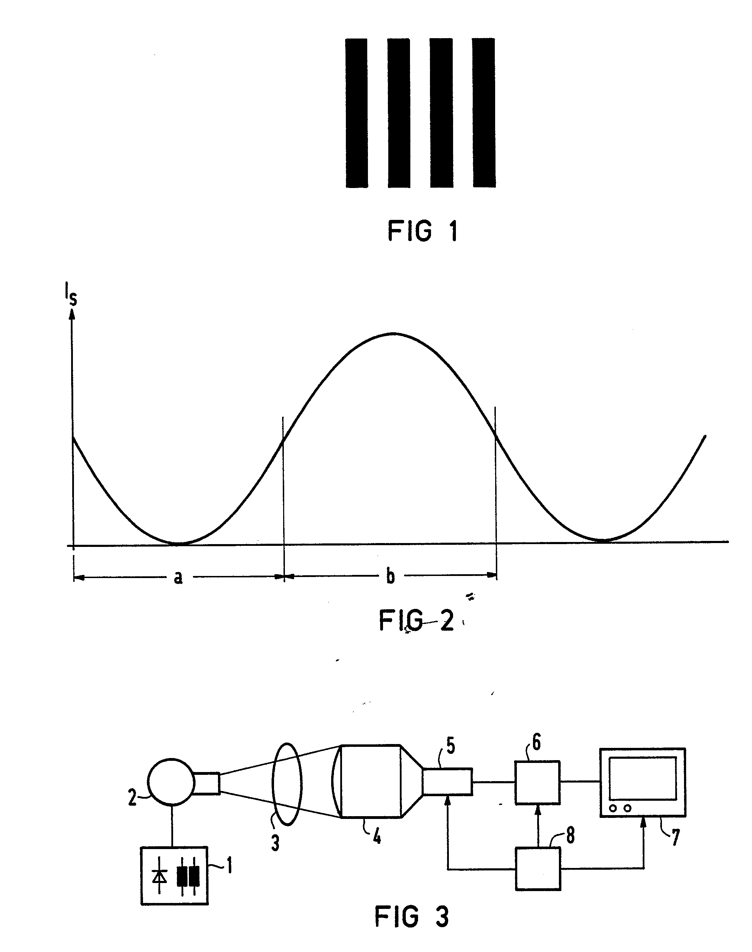

Wegen der Integration der Bildinformation über die horizontale Dauer eines Bildpunktes erfolgt zwangsläufig eine Reduktion der Auflösung in horizontaler Richtung. Dies soll nun anhand eines Testbildes, das in Fig. 1 dargestellt ist, näher veranschaulicht werden. Das Testbild weist vertikal angeordnete Schwarz-Weiß-Balken auf, deren Breite genau einer Breite eines Bildpunktes entspricht. Den nun folgenden Betrachtungen liegt die vereinfachende Voraussetzung zugrunde, daß der effektiv wirksame Querschnitt des abtastenden Elektronenstrahles der Höhe und der Breite eines Pixels, also eines Bildpunktes, entspricht. Erfolgt nun eine kontinuierliche Abtastung, so liefert die Fernsehaufnahmeröhre einen etwa sinusförmigen Signalstrom Is, der in Fig. 2 dargestellt ist. Für den Fall der absoluten Phasenkoinzidenz zwischen Testraster und A/D-Wandler ergibt sich z.B. durch Integration innerhalb der Bereiche a und b der Flächen unter dem Signalstrom der Fernsehaufnahmeröhre ein Hub von nur etwa 70 % des Spitzenwertes des Eingangssignales. Die Breite der Bereiche a und b entspricht dabei der Pixelbreite.

Die Erfindung geht von der Aufgabe aus, eine Fernsehaufnahmevorrichtung der eingangs genannten Art zu schaffen, die auch bei der höchsten möglichen Frequenz, welche digital aufgelöst werden kann, eine möglichst hohe Modulationsübertragungsfunktion aufweist und bei der die Signalanteile höchster möglicher Auflösung nicht sinusförmig verschliffen werden.

Die Aufgabe wird erfindungsgemäß dadurch gelöst, daß die Ablenkvorrichtung der Fernsehaufnahmeröhre derart ausgebildet ist, daß sie ein horizontales Ablenkfeld erzeugt, das eine diskrete, bildpunktweise Abtastung des Targets der Fernsehaufnahmeröhre synchron mit der Wandlerfrequnz des A/D-Wandlers bewirkt. Dadurch wird erreicht, daß kein Übersprechen von benachbarten Bildpunkten möglich ist, da sich der Abtaststrahl der Fernsehaufnahmeröhre auch in horizontaler Richtung diskontinuierlich fortbewegt. Praktisch bedeutet dies, daß der Abtaststrahl beim diskontinuierlichen Abtasten eines schwarzen Bildpunktes, während der gesamten Zeit der Abtastung dieses Bildpunktes den Signalstrom "0" hervorruft. Andererseits stehen die Signalstromanteile, welche normalerweise bei der kontinuierlichen Abtastung während der Abtastung des schwarzen Bildpunktes entstehen, aber räumlich dem weißen Bildpunkt zuzuordnen sind, nach der Abtastung des schwarzen Bildpunktes ungeschmälert zur Verfügung. Daher kann nun bei der diskontinuierlichen Abtastung des weißen Bildpunktes eine höhere Ladung abgetastet werden als es bei der kontinuierlichen Abtastung der Fall ist. Dies bedeutet, daß der Ablenkvorrichtung anstelle eines Sägezahnes für die horizontale Ablenkung, der kontinuierlich ansteigt, eine Ablenkspannung mit treppenförmigem Verlauf zugeführt werden muß.

Ein derartiges Ablenkfeld läßt sich erzeugen, wenn die Aufnahmeröhre zwei horizontale Ablenkplatten aufweist, denen um 180° phasenversetzte, mit der Frequenz des A/D-Wandlers synchrone Sägezahnspannungen zugeführt sind. Diese überlagern sich mit der normalen Sägezahnspannung, so daß sich der bereits angesprochene treppenförmige Verlauf des Ablenkfeldes ergibt. Einen einfacheren Aufbau erhält man, wenn der Fernsehaufnahmeröhre zwei horizontale Ablenkspulen zugeordnet sind, die ein sägezahnförmiges, mit der Frequenz des A/D-Wandlers synchrones Magnetfeld erzeugen, das dem Ablenkfeld überlagert wird. Die Integrationszeit der einzelnen Abschnitte läßt sich erhöhen, wenn zwei Sample-Hold-Schaltungen vorgesehen sind, die alternierend mit der Fernsehaufnahmeröhre oder dem A/D-Wandler verbunden sind.

Die Erfindung ist nachfolgend anhand von in der Zeichnung dargestellten Ausführungsbeispielen näher erläutert. Es zeigen:

Fig. 1 ein Testbild,

Fig. 2 den Signalstrom der Fernsehaufnahmeröhre bei kontinuierlicher Abtastung,

Fig. 3 eine Röntgendiagnostikeinrichtung mit einer Fernsehaufnahmevorrichtung,

Fig. 4 eine Fernsehaufnahmeröhre mit elekromagnetischer Ablenkvorrichtung,

Fig. 5 eine Fernsehaufnahmeröhre mit elektrostatischer Ablenkvorrichtung,

Fig. 6 Kurvenverläufe von Ablenkfeldern,

Fig. 7 Kurven der Modulationsübertragungsfunktion, die die Verbesserung durch die erfindungsgemäße Vorrichtung zeigen, und

Fig. 8 eine erfindungsgemäße Verarbeitungsschaltung.

In der Fig. 3 ist eine von einem Hochspannungsgenerator 1 betriebene Röntgenröhre 2 dargestellt, die ein Strahlenbündel aussendet, das einen Patienten 3 durchdringt und auf den Eingangsleuchtschirm eines Röntgenbildverstärkers 4 ein Strahlenbild wirft. Das Ausgangsbild des Röntgenbildverstärkers wird von einer Fernsehkamera 5 als Fernsehaufnahmevorrichtung aufgenommen, deren Ausgangssignal einer Verarbeitungsschaltung 6 zugeführt wird. Das Ausgangssignal der Verarbeitungsschaltung 6 wird auf einem Monitor 7 dargestellt. Eine Zentraleinheit 8 steuert den synchronen Ablauf der Signalerzeugung und -verarbeitung der Fernsehkamera 5, der Verarbeitungsschaltung 6 und des Monitors 7.

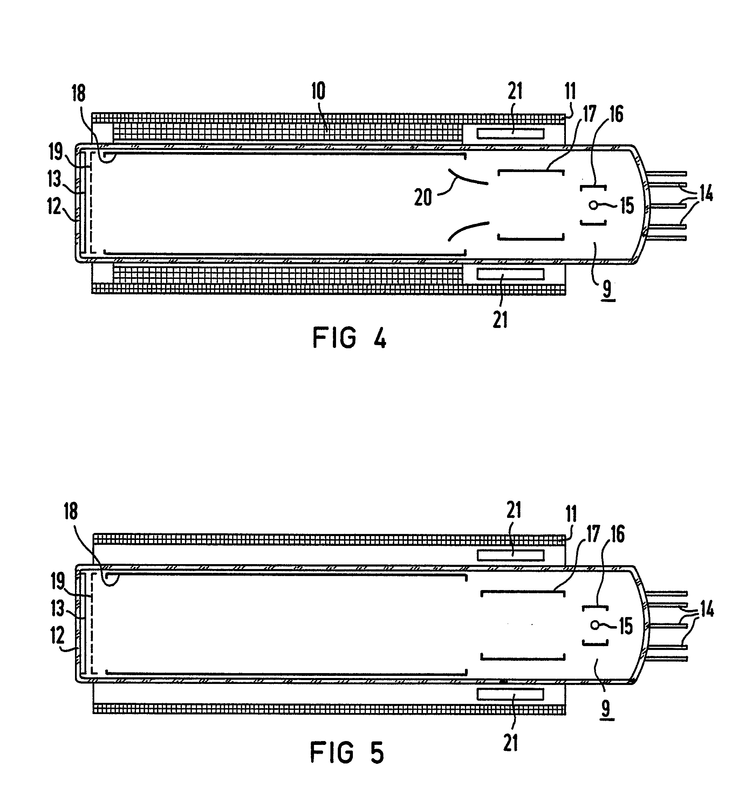

In den Fig. 4 und 5 ist eine Fernsehaufnahmeröhre 9 vom Vidikontyp dargestellt, die von Ablenkspulen 10 und einer Fokus sierspule 11 koaxial umfaßt wird. Auf der einen Seite eines Glaskolbens 12 ist in seinem Innenraum ein Target 13 aufgebracht, das aus einer Signalplatte mit Fotohalbleiter besteht. Auf der gegenüberliegenden Seite des Glaskolbens 12 sind die Anschlußstifte 14 herausgeführt. Auf dieser Seite ist eine Kathode 15 angeordnet, die von einem Wehnelt-Zylinder 16 umgeben ist. Davor sind weitere Elektroden angebracht, die aus einer Anode 17 (G2), einer Elektrode 18 (G3) und einer maschenförmigen Elektrode 19 bestehen.

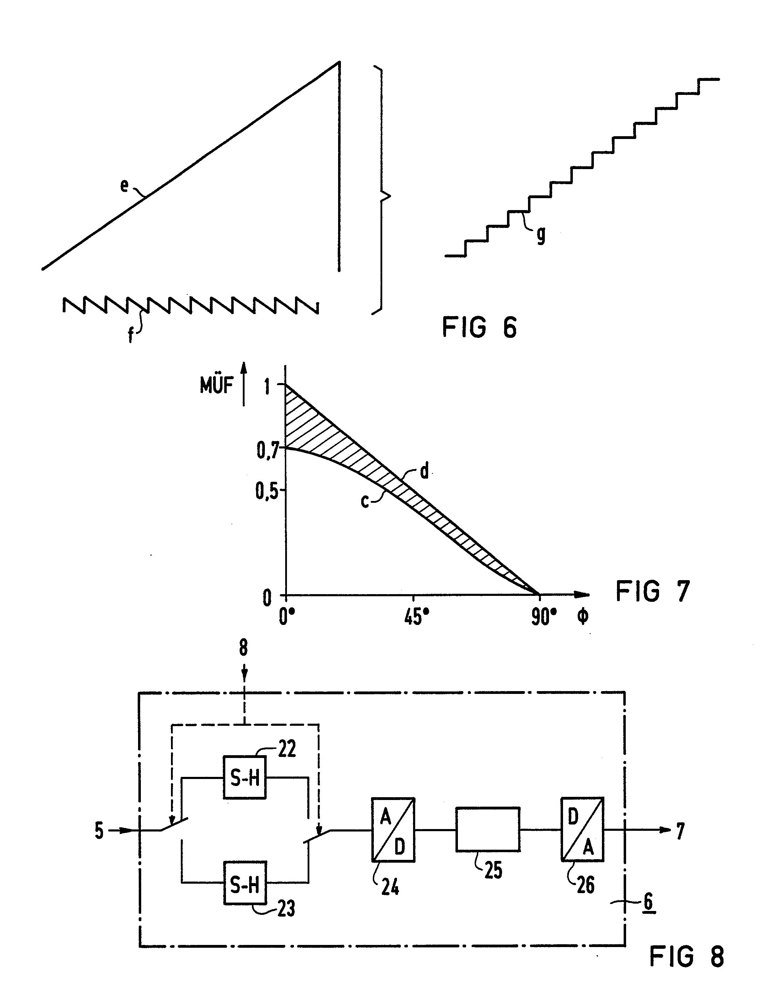

In der Fig. 4 ist die Fernsehaufnahmeröhre 9 erfindungsgemäß mit einer horizontalen Ablenkvorrichtung ausgerüstet, die aus zwei Ablenkplatten 20 besteht, die zwischen Anode 17 und Elektrode 18 angeordnet sind. An ihnen wird eine in Fig. 6 dargestellte, sägezahnförmige Ablenkspannung f angelegt, die eine Frequenz aufweist, die der Taktfrequenz für die Bildpunkte des in der Verarbeitungsschaltung 6 enthaltenen A/D-Wandlers entspricht. Dadurch wird dem in Fig. 6 dargestellten kontinuierlichen Ablenkfeld e ein Ablenkfeld f überlagert, so daß man ein diskontinuierliches, treppenförmiges Ablenkfeld g erhält.

Gemäß eines weiteren erfindungsgemäßen Ausführungsbeispieles kann die Ablenkvorrichtung der Fernsehaufnahmeröhre 9 anstelle der Ablenkplatten 20 zwei in horizontaler Richtung angeordnete, kleine, zusätzliche Ablenkspulen 21 enthalten, denen ein Strom zugeführt wird, der das in Fig. 6 dargestellte sägezahnförmige Ablenkfeld f mit der Taktfrequenz des D/A-Wandlers erzeugt. Dadurch ergibt sich der ebenfalls in Fig. 6 dargestellte treppenförmige Verlauf des Ablenkfeldes g.

Die Erfindung läßt sich auch bei elektrostatisch abgelenkten Bildaufnahmeröhren anwenden, wie dies anhand der Fig. 5 näher erläutert wird. Die elektrostatische Ablenkung erfolgt durch die entsprechend ausgebildete Elektrode 18 (G3), die aus Vertikal-und Horizontalablenkplatten besteht. Um den Glaskolben 12 der Fernsehaufnahmeröhre 9 ist die Fokussierspule 11 angeordnet. Zur erfindungsgemäßen zusätzlichen, magnetischen Ablenkung in horizontaler Abtastrichtung können im Bereich der Anode 17 die Ablenkspulen 21 angeordnet sein.

Anstelle der Ablenkspulen 21 kann aber der Elektrode 18 die in Fig. 6 dargestellte Ablenkspannung g zugeführt werden. Hierzu braucht die Fernsehaufnahmeröhre nicht gesondert ausgebildet zu werden, da bei elektrostatischer Ablenkung durch das Anlegen einer treppenförmigen Ablenkspannung auch tatsächlich eine treppenförmige Ablenkung realisierbar ist.

Eine besonders vorteilhafte, einfache Ausführung der treppenförmigen elektrostatischen Ablenkung bei einer Fernsehaufnahmeröhre erhält man, wenn die Ansteuerschaltung für die Erzeugung der Ablenkspannung derart ausgebildet ist, daß man der horizontalen Ablenkspannung, die in Fig. 6, Kurve e dargestellt ist, nach Passieren der Endstufe nachträglich eine wie in Fig. 6, Kurve f gezeigte zusätzliche Sägezahnspannung überlagert. Dadurch besteht die Möglichkeit, die hohe Spannung der normalen Ablenkspannung, die eine gegenüber der Bildpunktfrequenz niedrige Frequenz aufweist, mit relativ langsamen Transistoren zu erzeugen, die aber eine hohe Spannung verarbeiten können, während die hohe Frequenz der zusätzlichen Ablenkspannung in einer separaten elektronischen Schaltung erzeugt wird, wobei die Spannung nur kleine Amplituden aufzuweisen braucht. Anschliessend werden beide Sägezahnspannungen an den Elektroden mit dem Hauptsägezahn vermischt.

In der Fig. 7 ist mit der Kurve c die Modulationsübertragungsfunktion (MÜF) bei Grenzauflösung der in der Beschreibungseinleitung genannten, allgemein bekannten Fernsehaufnahmeröhre mit kontinuierlicher Ablenkung dargestellt. Von ihrem Maximalwert von 0,7 fällt diese Kurve in Abhängigkeit vom Phasenwinkel Phi ab, bis sie bei 90° "0" erreicht. Das bedeutet, daß bei einer Phasenverschiebung von 90° bei der Grenzauflösung, beispielsweise bei der Wiedergabe des in Fig. 1 dargestellten Testbildes, durch die Integration der Sinuskurve, kein Ausgangssignal entsteht. Die ebenfalls eingetragene Kurve d gibt die Modulationsübertragungsfunktion einer erfindungsgemäßen Fernsehauf nahmevorrichtung an, die mit diskontinuierlicher Ablenkung arbeitet. Sie fällt von dem maximal möglichen Wert von "1" bei einem Phasenwinkel von 0° linear bis zum Wert von "0" bei 90° ab. Der schraffierte Bereich gibt hierbei die Verbesserung der MÜF der erfindungsgemäßen Aufnahmeröhre gegenüber der bekannten an. Bei einer Phasenabweichung mit einem Phasenwinkel von Phi = 0° beträgt die relative Verbesserung 43 %. Bei einem Winkel Phi = 45° beträgt die relative Verbesserung noch 19 %. Daraus folgt, daß die durchschnittliche relative Verbesserung gemittelt über alle möglichen Phasenlagen ca. 20 % beträgt.

Damit die auf die geschilderte Art und Weise erreichten Verbesserungen nicht durch Begrenzung des Videofrequenzganges des Kameraverstärkers eliminiert werden, ist es nötig, den Videofrequenzgang den Erfordernissen dieser speziellen Anforderug anzupassen. Dies bedeutet, daß der Videofrequenzgang erweitert werden muß. Dadurch ist jedoch nicht eine Verschlechterung des Störabstandes zu erwarten, da unmittelbar vor der Digitalisierung des Videosignales die erwähnte Sample-Hold-Schaltung angeordnet ist, die phasensynchron mit der diskontinuierlichen Horizontalablenkung und der gleichzeitigen Digitalisierung arbeitet. Dadurch ist die originale Bandbreite des gesamten Verstärkerzuges bis zum A/D-Wandler auf den ursprünglichen Wert begrenzt.

Um eine exakte Funktion der Sample-Hold-Schaltung zu erzielen, ist es zweckmäßig, während des gesamten Intervalles eine Integration durchzuführen. Dies kann dadurch erreicht werden, daß zwei alternierend arbeitete Sample-Hold-Stufen in der Verarbeitungsschaltung 6 vorgesehen sind, wie dies in Fig. 8 dargestellt ist. Eine erste S-H-Stufe 22 integriert über den entsprechenden horizontalen ersten Zeitraum a das von der Fernsehkamera 5 gelieferte Videosignal und speichert diesen Wert. Ist der erste Zeitraum a verstrichen, wird das Videosignal der zweiten S-H-Stufe 23 zugeführt, die das Videosignal entsprechend über den zweiten Zeitraum b integriert. Gleichzeitig wird das gespeicherte Videosignal, das Ausgangssignal der S-H-Stufe 22, einem A/D-Wandler 24 zugeführt, der es digitalisiert. Bei Ende dieses zweiten Zeitraumes b wird der Wert in der ersten S-H-Stufe 22 gelöscht und dieser Stufe das folgende Videosignal zugeführt, während der A/D-Wandler 24 mit der zweiten S-H-Stufe 23 verbunden ist. An dem A/D-Wandler 24 kann eine Verarbeitungsstufe 25, die beispielsweise eine Differenzstufe und einen Bildspeicher enthält, angeschlossen sein. Das digitale Ausgangssignal der Verarbeitungsstufe 25 wird über einen D/A-Wandler 26 dem Monitor 7 zugeführt.

Unter Umständen kann es vorteilhaft sein, den Abtaststrahl der Fernsehaufnahmeröhre 9 während des Vorrückens zu sperren.

## Ansprüche

1. Fernsehaufnahmevorrichtung (5) mit einer Fernsehaufnahmeröhre (9), einer ein Ablenkfeld für den Abtaststrahl der Fernsehaufnahmeröhre (9) erzeugenden Ablenkvorrichtung (10, 18), einem Analog/Digital-Wandler (24) und einer Steuervorrichtung (8), die die Ablenkung des Abtaststrahles der Fernsehaufnahmeröhre (9) steuert und deren Synchronisierung mit dem Analog/Digital-Wandler (24) bewirkt, **dadurch gekennzeichnet,** daß die Ablenkvorrichtung (10, 18) der Fernsehaufnahmeröhre (9) derart ausgebildet ist, daß sie ein horizontales Ablenkfeld (g) erzeugt, das eine diskrete, bildpunktweise Abtastung des Targets (12) der Fernsehaufnahmeröhre (9) synchron mit der Wandlerfrequenz des Analog/Digital-Wandlers (24) bewirkt.

2. Fernsehaufnahmevorrichtung (5) nach Anspruch 1, **dadurch gekennzeichnet,** daß die Fernsehaufnahmeröhre (9) zwei horizontale Ablenkplatten (20) aufweist, denen um 180° phasenversetzte, mit der Frequenz des Analog/Digital-Wandlers (24) synchrone Sägezahnspannungen (f) zugeführt sind.

3. Fernsehaufnahmevorrichtung (5) nach Anspruch 1, **dadurch gekennzeichnet,** daß der Fernsehaufnahmeröhre (9) zwei horizontale Ablenkspulen (21) zugeordnet sind, die ein sägezahnförmiges, mit der Frequenz des Analog/Digital-Wandlers (24) synchrones Magnetfeld (f) erzeugen, das dem Ablenkfeld (e) überlagert wird.

4. Fernsehaufnahmevorrichtung (5) nach einem der Ansprüche 1 bis 3, **dadurch gekennzeichnet,** daß zwei Sample-Hold-Schaltungen (22, 23) vorgesehen sind, die alternierend mit der Fernsehaufnahmeröhre (9) oder dem Analog/Digital-Wandler (24) verbunden sind.

FIG 1

$I_S$

a    b

FIG 2

FIG 3

FIG 4

FIG 5

FIG 6

FIG 7

FIG 8